# EUROPEAN PATENT APPLICATION

(11) **EP 4 397 189 A1**
(43) Date of publication of application: **10.07.2024**
(21) Application number: 22864703.8
(22) Date of filing: 01.09.2022
(51) Int. Cl.: A23L 2/00, A23L 2/52, A23L 29/20, A23L 29/231, A23L 29/238, A23L 29/256, A23L 29/269

(54) **JELLY BEVERAGE**

(30) Priority: 03.09.2021 JP 2021143628
(71) Applicant: Morinaga & Co., Ltd., Tokyo 108-8403 (JP)
(72) Inventor: IMADA, Takamasa, Yokohama-shi, Kanagawa 230-8504 (JP); SHIBATA, Katsuaki, Yokohama-shi, Kanagawa 230-8504 (JP)
(74) Representative: Mewburn Ellis LLP
(86) International application number: PCT/JP2022/033019
(87) International publication number: WO 2023/033121

(57) **Abstract**

An object of the present invention is to provide a jelly beverage with a reduced astringent taste.

To achieve the objective, the present invention is a jelly beverage in which an amount of a separated water portion during crushing is 30 mass% or less relative to the entire jelly beverage, and a calcium ion concentration of the separated water portion during crushing is 0.34 mass% or less.

## Description

### Technical Field

The present invention relates to a jelly beverage.

### Background Art

Typically, a jelly beverage filled in a spout-attached pouch container is known. This type of jelly-like food product is in a form in which a person sucks the jelly-like food product from the mouth of the spout while compressing the container, so the person can easily eat the jelly-like food product even when going out. Accordingly, the jelly-like food product is popular.

With regard to the water separation rate of the jelly, the relationship among the fluidity, freshness, gel strength, and texture has been studied (Patent Literature 1).

It is also known that when a food product is ingested, water is separated from the food product crushed during mastication or the like (Patent Literature 2).

As described in Patent Literature 2, it is known that, for the purpose of examining the influence and the like when a food product is masticated, water separation and the like generated from the crushed food product itself is measured.

### Citation List

### Patent Literature

Patent Literature 1: JP 2018-227452 A
Patent Literature 2: JP 2014-211416 A

### Summary of Invention

### Technical Problem

As described in Patent Literature 1, a technique focusing on the amount itself of water separation from a massive jelly has been known. However, the relationship among the amount of water separation from the crushed jelly, the components in the water separation, and the astringent taste thereof has not been paid attention so far.

The present inventors have intensively studied, and as a result, have clarified the relationship among the amount of water separation of the crushed jelly, the calcium ion concentration in the water separation, and the astringent taste.

Hence, an objective of the present invention is to provide a jelly beverage with a reduced astringent taste.

### Solution to Problem

To achieve the objective, the present invention is a jelly beverage in which an amount of a separated water portion during crushing is 30 mass% or less relative to the entire jelly beverage, and
a calcium ion concentration of the separated water portion during crushing is 0.34 mass% or less.

The jelly beverage has the above characteristics, as a result of which the astringent taste of the jelly beverage can be reduced.

In a preferred embodiment of the present invention, the separated water portion during crushing is collected by the following method,
including: applying a load to a spout-attached pouch container containing 180 g of the jelly beverage to discharge the jelly beverage; and leaving, for one minute, the crushed jelly beverage on a sieve on which only a liquid drops to collect the separated water portion during crushing, which has dropped under the sieve,
in which the spout-attached pouch container is
in a form in which a straw is provided in a bag-shaped container made of a flexible sheet obtained by laminating a plastic film and a metal foil, and
in which the sheet has a surface dimension of 80 mm × 120 mm,
a folded part provided in the sheet has a length of 54 mm,
a mouthpiece of the straw has a diameter of 12.3 mm, and
the straw has a length of 94.5 mm.

In a preferred embodiment of the present invention, a ratio of (the calcium ion concentration of the separated water portion during crushing)/(a calcium ion concentration of the jelly beverage) is 0.80 or more and 0.99 or less.

In a preferred embodiment of the present invention, a calcium-reactive gelling agent is contained as a gelling agent.

In a preferred embodiment of the present invention, the calcium-reactive gelling agent is at least one gelling agent selected from gellan gum, carrageenan, and LM pectin.

In a preferred embodiment of the present invention, the calcium ion concentration of the jelly beverage is 0.01 mass% or more and 0.34 mass% or less.

In a preferred embodiment of the present invention, the jelly beverage has a Brix of 5 or more and 40 or less.

In a preferred embodiment of the present invention, the jelly beverage has a gel strength of 0.1 N or more and 2 N or less.

In a preferred embodiment of the present invention, 12 months after production of the jelly beverage, the amount of the separated water portion during crushing is
30 mass% or less relative to the entire jelly beverage, and
the calcium ion concentration of the separated water portion during crushing is 0.34 mass% or less.

The jelly beverage having the above characteristics is suitable for long-term storage.

Further, the present invention is also a method for producing a jelly beverage, including preparing raw materials such that an amount of a separated water portion during crushing is 30 mass% or less relative to the entire jelly beverage, and
a calcium ion concentration of a separated water portion during crushing is 0.34 mass% or less.

Preferably, the production method of the present invention includes: preparing a gelling agent dispersion liquid prepared by dispersing a gelling agent in water and a raw material dispersion liquid prepared by dispersing raw materials other than the gelling agent in water; and
mixing the gelling agent dispersion liquid with the raw material dispersion liquid.

Furthermore, the present invention is also a method for improving flavor of a jelly beverage containing a calcium ion source,
in which an amount of a separated water portion during crushing is 30 mass% or less relative to the entire jelly beverage, and
a calcium ion concentration of a separated water portion during crushing is 0.34 mass% or less.

### Advantageous Effects of Invention

According to the present invention, it is possible to provide a jelly beverage with a reduced astringent taste.

### Brief Description of Drawings

Fig. 1 is a view illustrating a spout-attached pouch container that can be used for crushing a jelly beverage.
Fig. 2 is a view showing a state of collecting a separated water portion during crushing (A) according to one embodiment.
Fig. 3 is a view showing a state of collecting a separated water portion during non-crushing (D) according to one embodiment.

### Description of Embodiments

Hereinafter, embodiments of the present invention will be described and provided for understanding of the present invention. Note that the following embodiment is one example embodying the present invention, and can be appropriately modified within the scope described in the claims.

The packaging form of the present invention is not particularly limited, and for example, a form in which a spout-attached pouch container is filled can be preferably exemplified.

In the case of employing a form in which a spout-attached pouch container is filled, a person allows the jelly food product to discharged from the mouth of the container while the person grasps or pushes the container by hand from the outside thereof, and thus the person can eat the jelly food product as though the person drinks it.

In this regard, the jelly food product in such a form is generally called a jelly beverage or the like.

Here, the spout-attached pouch container is, for example, a pouch container in which a straw is provided in a bag-shaped container made of a flexible sheet obtained by laminating a plastic film and a metal foil (See JP 3663084 B2, JP 3477396 B2, and JP 3659775 B2). In addition, the mouth of the spout-attached pouch container and the storage portion of the jelly beverage may be integrally molded with a bag-shaped container made of a flexible sheet obtained by laminating a plastic film and a metal foil. Further, the spout portion may be provided only in the upper part of the pouch container, or may penetrate into the inside of the pouch. Furthermore, even when the spout portion (straw portion) is not provided, the pouch container may be a pouch container whose tip part has a tapered shape and serves as a straw (e.g. "T pouch" manufactured by ORIHIRO Co., Ltd.) (e.g. JP 4988882 B2).

Here, the presence or absence and shape of the straw portion included in the spout-attached pouch container affect the texture of the jelly beverage after extrusion. Thus, it is possible to appropriately select the presence or absence and shape of the straw portion included in the spout-attached pouch container according to the texture required for the jelly beverage after extrusion. When the straw portion enters the pouch container, the jelly beverage after extrusion tends to disintegrate.

The spout-attached pouch container is in a form in which a straw is provided in a bag-shaped container made of a flexible sheet obtained by laminating a plastic film and a metal foil. Preferably, the sheet has a surface dimension of 80 mm × 120 mm, a folded part provided in the sheet has a length of 54 mm, a mouthpiece of the straw has a diameter of 12.3 mm, and the straw has a length of 94.5 mm.

Preferable examples of the spout-attached pouch container include the following.
• Product name: CP07 straw
• Standard: 80.0 mm (width) × 54.0 mm (folded part) × 120.00 mm (height)
· Manufacturer: HOSOKAWA YOKO Co., Ltd.

### <Separated water portion during crushing>

The separated water portion during crushing is obtained by applying a load to a spout-attached pouch container containing 180 g of the jelly beverage to discharge the jelly beverage; and leaving, for one minute, the crushed jelly beverage on a sieve on which only a liquid drops to collect the separated water portion during crushing (A), which has dropped under the sieve. Further, the jelly portion remaining on the sieve can be used as the gel portion during crushing (B) (hereinafter, also simply referred to as "gel portion (B)").

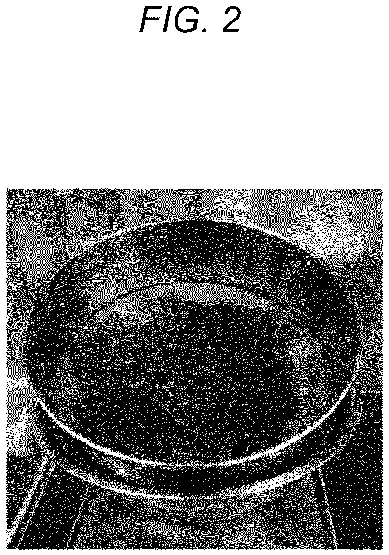

Here, as the sieve on which only a liquid drops, a 20-mesh sieve with a Kimtowel arranged on the back side can be preferably mentioned (see Fig. 2).

As shown in a state of collecting a separated water portion during crushing (A) according to one embodiment (Fig. 2), the use of a 20-mesh sieve with a Kimtowel arranged on the back side makes it possible to reliably collect the separated water portion during crushing (A) without mixing the crushed jelly.

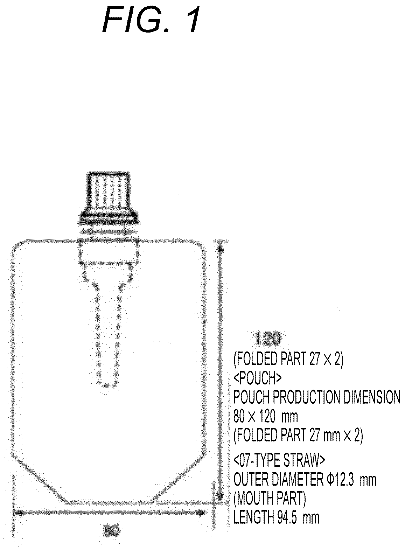

Here, the spout-attached pouch container is in a form in which a straw is provided in a bag-shaped container made of a flexible sheet obtained by laminating a plastic film and a metal foil. Preferably, the sheet has a surface dimension of 80 mm × 120 mm, a folded part provided in the sheet has a length of 54 mm, a mouthpiece of the straw has a diameter of 12.3 mm, and the straw has a length of 94.5 mm (Fig. 1).

Preferable examples of the spout-attached pouch container include the following.
• Product name: CP07 straw
• Standard: 80.0 mm (width) × 54.0 mm (folded part) × 120.00 mm (height)
· Manufacturer: HOSOKAWA YOKO Co., Ltd.

The degree of load when extruding the jelly beverage from the spout-attached pouch can be 1 kg or more and 15 kg or less as a guide.

Further, the method of applying a load when extruding the jelly beverage from the spout-attached pouch container is not particularly limited as long as it is a method capable of uniformly applying a load to the sheet surface.

Examples of the method of applying a load to the sheet surface of the spout-attached pouch container may include both a method using a rheometer and a method using a pressing machine.

The state of the jelly beverage at the time of eating can be reproduced by crushing the jelly beverage by the above method.

Then, crushing the jelly beverage by the above method makes it possible to analyze the relationship amount the amount of water separation from the crushed jelly, the components in the water separation, and the astringent taste thereof.

The weight of the separated water portion during crushing (A) collected by the above method is measured, and the rate of (the weight of the separated water portion during crushing (A))/(the weight of the entire jelly beverage (C)) can be defined as the water separation rate during crushing.

The water separation rate during crushing of the jelly beverage of the present invention is 30 mass% or less, preferably 25 mass% or less, more preferably 20 mass% or less, still more preferably 16 mass% or less, and particularly preferably 10 mass% or less.

The water separation rate during crushing of the jelly beverage is set to an upper limit value or less, whereby the astringent taste of the jelly beverage can be reduced. Further, when a crushed state of the jelly beverage is eaten, the jelly beverage has a chewable texture.

In addition, the water separation rate during crushing of the jelly beverage of the present invention is preferably 0.1 mass% or more, more preferably 1 mass% or more, still more preferably 2 mass% or more, and particularly preferably 3 mass% or more. The water separation rate during crushing of the jelly beverage is set to a lower limit value or more, whereby a jelly beverage having freshness can be obtained.

The water separation rate during crushing tends to decrease due to an increase in the amount of the gelling agent contained in the jelly beverage, whereas the water separation rate during crushing tends to increase due to a decrease in the amount of the gelling agent contained in the jelly beverage.

In addition, the calcium ion concentration of the separated water portion during crushing (A) in the jelly beverage according to the present invention is preferably 0.01 mass% or more, and more preferably 0.015 mass% or more.

The calcium ion concentration of the separated water portion during crushing (A) in the jelly beverage according to the present invention is preferably 0.34 mass% or less, more preferably 0.27 mass% or less, and still more preferably 0.20 mass% or less.

In addition, the calcium ion concentration of the gel portion (B) in the jelly beverage according to the present invention is preferably 0.01 mass% or more, and more preferably 0.015 mass% or more.

Further, the calcium ion concentration of the gel portion (B) in the jelly beverage according to the present invention is preferably 0.34 mass% or less, more preferably 0.27 mass% or less, and still more preferably 0.20 mass% or less.

In addition, the calcium ion concentration of the entire jelly beverage (C) according to the present invention is preferably 0.01 mass% or more, and more preferably 0.015 mass% or more.

Further, the calcium ion concentration of the entire jelly beverage (C) according to the present invention is preferably 0.34 mass% or less, more preferably 0.27 mass% or less, and still more preferably 0.20 mass% or less.

The calcium ion concentrations of the separated water portion during crushing (A), the gel portion (B), and the entire jelly beverage (C) can be measured by ICP emission spectrometry.

Calcium ions cause an astringent taste. The astringent taste can be reduced by setting the calcium ion concentrations of the separated water portion during crushing (A), the gel portion (B), and the entire jelly beverage (C) within the above ranges.

The calcium ion concentrations of (A) to (C) are increased by increasing the amount of calcium lactate contained in the jelly beverage. Meanwhile, the calcium ion concentrations of (A) to (C) are decreased by decreasing the amount of calcium lactate contained in the jelly beverage.

In addition, based on the ratio of the calcium ion concentrations in (A) to (C), it is possible to analyze how calcium ions are distributed between the separated water portion during crushing and the jelly portion.

The ratio of (the calcium ion concentration of the separated water portion during crushing (A))/(the calcium ion concentration of the entire jelly beverage (C)) is preferably 0.80 or more, more preferably 0.85 or more, and still more preferably 0.90 or more.

The ratio of (the calcium ion concentration of the separated water portion during crushing (A))/(the calcium ion concentration of the entire jelly beverage (C)) is preferably 0.99 or less, more preferably 0.97 or less, and still more preferably 0.95 or less.

Adjustment of the amount of the cationically reactive gelling agent contained in the jelly beverage enables the ratio of (the calcium ion concentration of the separated water portion during crushing (A))/(the calcium ion concentration of the entire jelly beverage (C)) to be adjusted.

In addition, the ratio of (the calcium ion concentration of the separated water portion during crushing (A))/(the calcium ion concentration of the gel portion during crushing (B)) is preferably 0.80 or more and 0.99 or less, more preferably 0.85 or more and 0.97 or less, and still more preferably 0.90 or more and 0.95 or less.

Adjustment of the amount of the cationically reactive gelling agent contained in the jelly beverage enables the ratio of (the calcium ion concentration of the separated water portion during crushing (A))/(the calcium ion concentration of the gel portion during crushing (B)) to be adjusted.

### <Separated water portion during non-crushing>

In addition, it is possible to take out the jelly beverage from the container so as not to cause collaption of the jelly beverage, to leave, for one minute, the jelly beverage on a sieve on which only a liquid drops, and to collect the separated water portion during non-crushing (D), which has dropped under the sieve. The weight of the separated water portion during non-crushing is measured, and the rate of (the weight of the separated water portion during non-crushing (D))/(the weight of the entire jelly beverage (C)) can be defined as the water separation rate during non-crushing.

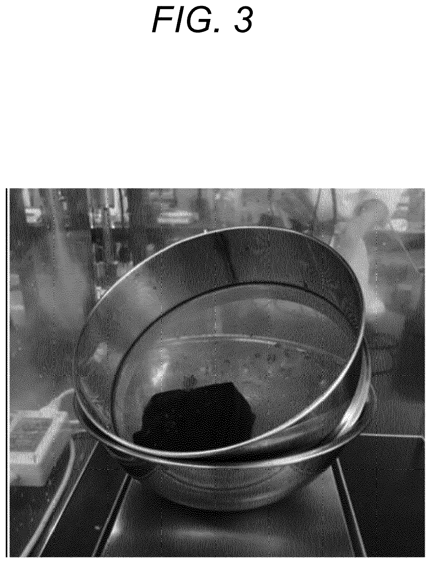

Here, as the sieve on which only a liquid drops, a 20-mesh sieve can be preferably mentioned (see Fig. 3).

As shown in a state of collecting a separated water portion during non-crushing (D) according to one embodiment (Fig. 3), the use of a 20-mesh sieve makes it possible to reliably collect the separated water portion during non-crushing (D) without mixing the jelly.

The water separation rate during non-crushing is preferably 10 mass% or less, more preferably 5 mass% or less, still more preferably 1.5 mass% or less, particularly preferably 1.0 mass% or less, and most preferably 0.5 mass% or less. Further, the water separation rate during non-crushing is preferably 0 mass% or more, preferably 0.1 mass% or more, more preferably 0.2 mass% or more, and particularly preferably 0.3 mass% or more.

The water separation rate during non-crushing can be reduced by increasing the amount of the gelling agent contained in the jelly beverage.

The water separation rate during non-crushing can be increased by reducing the amount of the gelling agent contained in the jelly beverage.

### <Composition>

The jelly beverage of the present invention contains a gelling agent. As the gelling agent, gellan gum, κ-carrageenan, LM pectin, xanthan gum, locust bean gum, glucomannan, agar, or tara gum can be preferably used.

The jelly beverage of the present invention preferably contains a calcium-reactive gelling agent. Examples of the calcium-reactive gelling agent include gellan gum, κ-carrageenan, and LM pectin.

The content of the gelling agent is preferably 0.05 mass% or more, and more preferably 0.10 mass% or more.

The content of the gelling agent is preferably 0.25 mass% or less, and more preferably 0.20 mass% or less.

Increasing the content of the gelling agent makes it possible to lower the water separation rate during crushing and the water separation rate during non-crushing.

The jelly beverage of the present invention contains a calcium ion source.

Increasing the amount of the calcium ion source makes it possible to increase the calcium ion concentration of the entire jelly beverage.

The content of the calcium ion source is preferably 0.05 mass% or more, more preferably 0.1 mass% or more, and still more preferably 0.2 mass% or more.

Further, the content of the calcium ion source is preferably 2.0 mass% or less, more preferably 1.5 mass% or less, and still more preferably 1.2 mass% or less.

Preferable examples of the calcium ion source include various raw materials containing calcium ions, such as calcium lactate, calcium carbonate, tricalcium phosphate, calcium monohydrogen phosphate, calcium dihydrogen phosphate, calcium dihydrogen pyrophosphate, calcium citrate, calcium gluconate, calcium glycerophosphate, calcium pantothenate, calcium ascorbate, calcium stearate, calcium chloride, calcium acetate, calcium oxide, calcium silicate, calcium sulfate, calcined calcium (which refers to one mainly containing a calcium compound obtained by calcining sea urchin shells, seashells, reef-building corals, whey, bones or eggshells), and uncalcined calcium (which refers to one mainly containing a calcium salt obtained by drying seashells, nacreous layers of pearls, reef-building corals, bones, or eggshells).

The content of one or more components selected from the calcium ion source is preferably 0.05 mass% or more, more preferably 0.1 mass% or more, and still more preferably 0.2 mass% or more.

Further, the content of one or more components selected from the calcium ion source is preferably 2.0 mass% or less, more preferably 1.5 mass% or less, and still more preferably 1.2 mass% or less.

Here, the water content of the jelly beverage of the present invention is preferably 50 mass% or more, more preferably 55 mass% or more, and more preferably 60 mass% or more.

Further, the water content of the jelly beverage of the present invention is 95 mass% or less, more preferably 90 mass% or less, and more preferably 75 mass% or less.

In the jelly beverage of the present invention, other components usually used in the jelly beverage can be optionally blended as long as the effect of the present invention is not impaired. Examples of the optional components include a jelly beverage additive, a monosaccharide, an oligosaccharide, an amino acid, an organic amine, a pH adjuster, vitamins, an antioxidant, an antioxidant aid, a dairy ingredient, a dietary fiber, and a stabilizer.

Preferably, the components are blended such that the pH of the jelly beverage to be obtained is 3.0 to 6.0, more preferably 3.0 to 5.0, and still more preferably 3.0 to 4.6. When the pH of the jelly beverage to be obtained is 4.6 or less, the propagation of microorganisms can be suppressed, which is preferable from the viewpoint of hygiene of the jelly beverage. Further, setting the pH to 3.0 or more makes it possible to suppress the sourness of the jelly beverage, which is preferable.

### <Brix>

In addition, the Brix of the jelly beverage according to the invention of the present application is preferably 1 or more, more preferably 3 or more, and still more preferably 5 or more. Further, the Brix of the jelly beverage according to the invention of the present application is preferably 50 or less, more preferably 45 or less, and still more preferably 40 or less.

As a method of calculating the Brix value of the jelly beverage, a method of measuring the Brix value using a saccharimeter can be mentioned. Examples thereof can include a method of calculating the Brix value using a refractometer, and a method of determining the Brix value by comparing the concentration of sugar in the jelly beverage with a calibration curve of Brix values.

The Brix value of the jelly beverage can be adjusted by adjusting the content of carbohydrate in the jelly beverage.

### <Gel strength>

The gel strength of the jelly beverage according to the invention of the present application is preferably 0.1 N (kg·m/s²) or more and 2 N (kg·m/s²) or less.

Setting the jelly strength within the above range makes it possible to give a good texture. Further, the jelly strength is set to the upper limit or less, whereby it possible to improve the discharge properties from the container, particularly in the form of filling a pouch container with a spout.

For example, the strength of the jelly beverage can be measured (compression test) at room temperature using a rheometer (CR-500DX, manufactured by Sun Scientific Co., Ltd.) under the conditions of a cylindrical plunger having a diameter of 10 mm, an entry speed of 60 mm/min, and a maximum load of 20 N (kg·m/s²).

### <Temporal change>

Preferably, the jelly beverage according to the present invention maintains the above characteristics 3 months, more preferably 5 months, still more preferably 10 months, and particularly preferably 1 year after the production.

### <Production method>

The jelly beverage according to the present invention can be produced by an ordinary method, and is preferably produced by the production method which includes: preparing a gelling agent dispersion liquid prepared by dispersing a gelling agent in water and a raw material dispersion liquid prepared by dispersing raw materials other than the gelling agent in water; and mixing the gelling agent dispersion liquid with the raw material dispersion liquid. According to this production method, it is possible to allow the gelling agent to be swollen, and reduce the water separation rate during crushing and the water separation rate during non-crushing.

In addition, it is preferable to include a step of filling the spout-attached pouch container with the prepared jelly raw material. The operation of filling the spout-attached pouch container with the jelly raw material can be performed by, for example, the method described in JP 3527019 B2 or JP H11-157502 A by the present applicant.

The method for producing a jelly beverage of the present invention includes any one of a method of heating and cooling the jelly raw material after the filling step, a method of once heating the jelly raw material after the preparation step, then filling a spout-attached pouch container with the jelly raw material, and cooling the jelly raw material, and a method of not performing heating. Here, in the case of heating, the heating temperature is preferably 80°C or higher, and more preferably 90°C or higher. Strengthening the sterilization condition makes it possible to cope with normal temperature distribution of the jelly beverage.

### Examples

### <Example 1> Study on influence of water separation during crushing of jelly beverage on astringent taste of entire jelly beverage

Jelly beverages were produced using various gelling agents. Then, the influences of the calcium ion concentrations of the separated water portion during crushing (A), the gel portion (B), and the entire jelly beverage (C), the ratio of the calcium concentrations, the water separation rate during non-crushing, and the water separation rate during crushing on the astringent taste of the entire jelly beverage were studied.

### (1) Production of jelly beverage

Jelly beverages were produced using the gelling agents described in Tables 1 to 6 and calcium lactate (12 hydrate). The production method is as follows.

First, a raw material dispersion liquid was prepared in which raw materials other than the gelling agent: 15 mass% of sugar, 0.06 mass% of sodium citrate, and citric acid were dispersed in water. The pH was adjusted with citric acid to form a dispersion liquid having a pH of 3.5 to 3.8. Next, a gelling agent dispersion liquid was prepared in which a gelling agent was dispersed in water. The dispersion liquid was heated to 90 to 95°C and dissolved, which was added to the raw material dispersion liquid. The mixture was heated to 95°C, then a spout container was filled with the mixture. The container was cooled with flowing water for 15 minutes such that the jelly beverage had a temperature of 26°C.

### (2) Collection of separated water portion during crushing (A), gel portion (B), and entire jelly beverage (C)

### · Separated water portion during crushing (A), gel portion (B)

The jelly beverage was crushed by manually squeezing 180 g of the jelly beverage contained in a spout-attached pouch container, applying a load thereto, and discharging the jelly beverage. The crushed jelly beverage was left on a 20-mesh sieve with a Kimtowel arranged on the back side for one minute, and a separated water portion during crushing (A), which had dropped under the sieve, was collected. Further, a portion remaining on the sieve was defined as the gel portion during crushing (B).

As the spout-attached pouch container, the following one was used.
· Product name: CP07 straw
· Standard: 80.0 mm (width) × 54.0 mm (folded part) × 120.00 mm (height)
· Manufacturer: HOSOKAWA YOKO Co., Ltd.

The spout-attached pouch container is in a form in which a straw is provided in a bag-shaped container made of a flexible sheet obtained by laminating a plastic film and a metal foil. The sheet has a surface dimension of 80 mm × 120 mm, a folded part provided in the sheet has a length of 54 mm, a mouthpiece of the straw has a diameter of 12.3 mm, and the straw has a length of 94.5 mm.

The calcium ion concentration was measured for each of the separated water portion during crushing (A), the gel portion (B), and the entire jelly beverage (C). The calcium ion concentration was measured by ICP emission spectrometry.

In addition, the ratio of (the calcium ion concentration of the separated water portion during crushing (A))/(the calcium ion concentration of the entire jelly beverage (C)) and the ratio of (the calcium ion concentration of the separated water portion during crushing (A))/(the calcium ion concentration of the gel portion (B)) were calculated.

### · Water separation rate

The weight of the separated water portion during crushing (A) collected by the above method was measured, and the rate of (the weight of the separated water portion during crushing (A))/(the weight of the entire jelly beverage (C)) was defined as the water separation rate during crushing.

Further, the jelly beverage was taken out from the container so as not to cause collaption of the jelly beverage, the jelly beverage was left on a 20-mesh sieve for one minute, and the separated water portion during non-crushing (D), which had dropped under the sieve, was collected. The weight of the separated water portion during non-crushing was measured, and the rate of (the weight of the separated water portion during non-crushing (D))/(the weight of the entire jelly beverage (C)) was defined as the water separation rate during non-crushing.

### (3) Evaluation

The produced jelly beverages were evaluated as follows.

### · Sensory evaluation

Three panelists specialized in the production of jelly beverages were subjected to the sensory evaluation test according to the following criteria.
⊙: No astringent taste is felt
○: Slight astringent taste is felt but it does not remain on the tongue.
Δ: Slight astringent taste remains on the tongue
×: Strong astringent taste is felt

### (4) Test conditions and results

### [Test Example 1]

Table 1 shows the results of jelly beverages prepared using 0.07 mass% of gellan gum and 0.00 to 0.15 mass% of xanthan gum as gelling agents.

As shown in Table 1, it is found that the panelists are less likely to feel an astringent taste in the case of the jelly beverages in which an amount of a separated water portion during crushing is 30 mass% or less relative to the entire jelly beverage, and a calcium ion concentration of the separated water portion during crushing is 0.34 mass% or less.

As shown in Table 1, it is found that the larger the amount of xanthan gum is, the lower the water separation rate during crushing and the water separation rate during non-crushing are, and the astringent taste is reduced in the sensory evaluation.

In addition, it is found that as the amount of xanthan gum is larger, the calcium ion concentration of the gel portion (B) tends to be lower, and the ratio of (the calcium ion concentration of the separated water portion during crushing (A))/(the calcium ion concentration of the gel portion (B)) tends to be larger.

**[Table 1]**

| | Preparation | | | Measurement | | | | | | | |
|---|---|---|---|---|---|---|---|---|---|---|---|
| | Gelling agent | | Calcium lactate | Calcium ion concentration | | | Calcium ratio | | Water separation rate | | Sensory evaluation |
| | Gellan gum | Xanthan gum | | Separated water portion during crushing (A) | Gel portion (B) | Entire (C) | (A)/(B) | (A)/(C) | During non-crushing | During crushing | |
| Comparative Example 1 | 0.07% | 0.00% | 0.10% | 0.016% | 0.018% | 0.017% | 0.89 | 0.94 | 6.5% | 35% | × |
| Example 1-1 | 0.07% | 0.03% | 0.10% | 0.016% | 0.017% | 0.017% | 0.94 | 0.94 | 3.0% | 23% | ○ |
| Example 1-2 | 0.07% | 0.06% | 0.10% | 0.016% | 0.017% | 0.017% | 0.94 | 0.94 | 1.2% | 16% | ⊙ |
| Example 1-3 | 0.07% | 0.09% | 0.10% | 0.016% | 0.017% | 0.017% | 0.94 | 0.94 | 0.2% | 12% | ⊙ |
| Example 1-4 | 0.07% | 0.12% | 0.10% | 0.016% | 0.017% | 0.017% | 0.94 | 0.94 | 0.1% | 9.3% | ⊙ |
| Example 1-5 | 0.07% | 0.15% | 0.10% | 0.016% | 0.017% | 0.017% | 0.94 | 0.94 | 0% | 8.1% | ⊙ |

### [Test Example 2]

Table 2 shows the results of jelly beverages prepared using 0.07 mass% of gellan gum, 0.15 mass% of xanthan gum, and 0.01 to 0.05 mass% of glucomannan as gelling agents.

As shown in Table 2, it is found that the panelists are less likely to feel an astringent taste in the case of the jelly beverages in which an amount of a separated water portion during crushing is 30 mass% or less relative to the entire jelly beverage, and a calcium ion concentration of the separated water portion during crushing is 0.34 mass% or less.

The larger the amount of glucomannan was, the lower both the water separation rate during crushing and the water separation rate during non-crushing tended to be. In the sensory evaluation, all the panelists felt no astringent taste.

**[Table 2]**

| | Preparation | | | | Measurement | | | | | | | |
|---|---|---|---|---|---|---|---|---|---|---|---|---|
| | Gelling agent | | | Calcium lactate | Calcium ion concentration | | | Calcium ratio | | Water separation rate | | Sensory evaluation |
| | Gellan gum | Xanthan gum | Glucomannan | | Separated water portion during crushing (A) | Gel portion (B) | Entire (C) | (A)/(B) | (A)/(C) | During non-crushing | During crushing | |
| Example 2-1 | 0.07% | 0.15% | 0.01% | 0.10% | 0.016% | 0.017% | 0.017% | 0.94 | 0.94 | 1.3% | 2.6% | ⊙ |
| Example 1-1 | 0.07% | 0.15% | 0.02% | 0.10% | 0.016% | 0.017% | 0.017% | 0.94 | 0.94 | 1.0% | 2.7% | ⊙ |
| Example 2-3 | 0.07% | 0.15% | 0.05% | 0.10% | 0.016% | 0.017% | 0.017% | 0.94 | 0.94 | 0.7% | 1.0% | ⊙ |

### [Test Example 3]

Table 3 shows the results for jelly beverages prepared using 0.07 mass% of gellan gum and 0.06 to 0.09 mass% of locust bean gum as gelling agents.

As shown in Table 3, it is found that the panelists are less likely to feel an astringent taste in the case of the jelly beverages in which an amount of a separated water portion during crushing is 30 mass% or less relative to the entire jelly beverage, and a calcium ion concentration of the separated water portion during crushing is 0.34 mass% or less.

In addition, it is found that the larger the amount of locust bean gum is, the lower the water separation rate during crushing and the water separation rate during non-crushing are, and the astringent taste is reduced in the sensory evaluation.

**[Table 3]**

| | Preparation | | | Measurement | | | | | | | |
|---|---|---|---|---|---|---|---|---|---|---|---|
| | Gelling agent | | Calcium lactate | Calcium ion concentration | | | Calcium ratio | | Water separation rate | | Sensory evaluation |
| | Gellan gum | Locust bean gum | | Separated water portion during crushing (A) | Gel portion (B) | Entire (C) | (A)/(B) | (A)/(C) | During non-crushing | During crushing | |
| Example 3-1 | 0.07% | 0.06% | 0.10% | 0.016% | 0.017% | 0.017% | 0.94 | 0.94 | 7.8% | 29% | Δ |
| Example 3-2 | 0.07% | 0.09% | 0.10% | 0.016% | 0.017% | 0.017% | 0.94 | 0.94 | 5.0% | 21% | ○ |

### [Test Example 4]

Table 4 shows the results for jelly beverages prepared using 0.07 mass% of gellan gum, 0.02 to 0.04 mass% of xanthan gum, and 0.02 to 0.04 mass% of locust bean gum as gelling agents.

As shown in Table 4, it is found that the panelists are less likely to feel an astringent taste in the case of the jelly beverages in which an amount of a separated water portion during crushing is 30 mass% or less relative to the entire jelly beverage, and a calcium ion concentration of the separated water portion during crushing is 0.34 mass% or less.

In addition, it is found that the larger the amounts of xanthan gum and locust bean gum are, the lower the water separation rate during crushing and the water separation rate during non-crushing are, and the astringent taste is reduced in the sensory evaluation.

**[Table 4]**

| | Preparation | | | | Measurement | | | | | | | |
|---|---|---|---|---|---|---|---|---|---|---|---|---|
| | Gelling agent | | | Calcium lactate | Calcium ion concentration | | | Calcium ratio | | Water separation rate | | Sensory evaluation |
| | Gellan gum | Xanthan gum | Locust bean gum | | Separated water portion during crushing (A) | Gel portion (B) | Entire (C) | (A)/(B) | (A)/(C) | During non-crushing | During crushing | |
| Example 4-1 | 0.07% | 0.02% | 0.02% | 0.10% | 0.016% | 0.017% | 0.017% | 0.94 | 0.94 | 4.7% | 18% | ○ |
| Example 4-2 | 0.07% | 0.04% | 0.04% | 0.10% | 0.016% | 0.017% | 0.017% | 0.94 | 0.94 | 1.8% | 10% | ⊙ |

### [Test Example 5]

Table 5 shows the results for jelly beverages prepared using 0.20 mass% agar and 0 to 0.20 mass% LM pectin as gelling agents.

As shown in Table 5, it is found that the panelists are less likely to feel an astringent taste in the case of the jelly beverages in which an amount of a separated water portion during crushing is 30 mass% or less relative to the entire jelly beverage, and a calcium ion concentration of the separated water portion during crushing is 0.34 mass% or less.

In addition, it is found that the larger the amount of LM pectin is, the lower the water separation rate during crushing and the water separation rate during non-crushing are, and the astringent taste is reduced in the sensory evaluation.

**[Table 5]**

| | Preparation | | | Measurement | | | | | |
|---|---|---|---|---|---|---|---|---|---|
| | Gelling agent | | Calcium lactate | Calcium ion concentration | | Calcium ratio | Water separation rate | | Sensory evaluation |
| | Agar | LM pectin | | Separated water portion during crushing (A) | Entire (C) | (A)/(C) | During non-crushing | During crushing | |
| Comparative Example 5-1 | 0.20% | | 0.10% | 0.017% | 0.017% | 1 | 18% | 34% | × |
| Comparative Example 5-2 | 0.20% | 0.05% | 0.10% | 0.016% | 0.017% | 0.94 | 15% | 34% | × |
| Comparative Example 5-3 | 0.20% | 0.10% | 0.10% | 0.016% | 0.017% | 0.94 | 11% | 32% | × |
| Example 5-1 | 0.20% | 0.20% | 0.10% | 0.014% | 0.017% | 0.83 | 6% | 25% | Δ |

### [Test Example 6]

Table 6 shows the results of jelly beverages prepared using 0.2 mass% of calcium lactate and gellan gum as a gelling agent.

As shown in Table 6, it is found that the panelists are less likely to feel an astringent taste in the case of the jelly beverages in which an amount of a separated water portion during crushing is 30 mass% or less relative to the entire jelly beverage, and a calcium ion concentration of the separated water portion during crushing is 0.34 mass% or less.

**[Table 6]**

| | Preparation | | Measurement | | | | |
|---|---|---|---|---|---|---|---|
| | Gelling agent | Calcium lactate | Calcium ion concentration | | Calcium ratio | Water separation rate | Sensory evaluation |
| | Gellan gum | | Separated water portion during crushing (A) | Entire (C) | (A)/(C) | During crushing | |
| Example 6-1 | 0.07 | 0.20% | 0.028% | 0.029% | 0.97 | 20% | ○ |
| Example 6-2 | 0.15 | 0.20% | 0.027% | 0.029% | 0.93 | 5% | ⊙ |
| Example 6-3 | 0.30 | 0.20% | 0.026% | 0.029% | 0.90 | 1% | ⊙ |

### [Test Example 7]

Table 7 shows the results for jelly beverages prepared using 0.06 mass% of calcium lactate, 0.07 mass% of gellan gum, and 0 to 0.03 mass% of xanthan gum as gelling agents.

As shown in Table 7, it is found that the panelists are less likely to feel an astringent taste in the case of the jelly beverages in which an amount of a separated water portion during crushing is 30 mass% or less relative to the entire jelly beverage, and a calcium ion concentration of the separated water portion during crushing is 0.34 mass% or less.

In addition, as compared with the results of Tables 1 to 5, it is found that the calcium ion concentration of the entire jelly beverage (C) decreases when the content of calcium lactate is reduced, whereas the calcium ion concentration of the entire jelly beverage (C) increases when the content of calcium lactate is increased.

Further, it is found that as the amount of the gelling agent is larger, the water separation rate during crushing tends to decrease, and the astringent taste is reduced in the sensory evaluation.

**[Table 7]**

| | Preparation | | | Measurement | | | | |
|---|---|---|---|---|---|---|---|---|
| | Gelling agent | | Calcium lactate | Calcium ion concentration | | Calcium ratio | Water separation rate | Sensory evaluation |
| | Gellan gum | Xanthan gum | | Separated water portion during crushing (A) | Entire (C) | (A)/(C) | During crushing | |
| Comparative Example 7-1 | 0.07 | 0 | 0.06% | 0.010% | 0.011% | 0.91 | 33% | × |
| Example 7-1 | 0.07 | 0.03 | 0.06% | 0.010% | 0.011% | 0.91 | 23% | ○ |
| Comparative Example 7-2 | 0.15 | 0 | 2.00% | 0.264% | 0.270% | 0.98 | 35% | × |
| Example 7-2 | 0.15 | 0.03 | 2.00% | 0.264% | 0.270% | 0.98 | 12% | Δ |

### <Temporal change>

### [Test Example 8]

Jellies were produced in a manner similarly to that described above using the gelling agent and calcium lactate described in Table 8. The evaluation similarly to that described above was performed at the time of production and 3 months, 5 months, and 10 months after the production, and the temporal change was evaluated.

**[Table 8]**

| | Preparation | | Time after production | Measurement | | | | | | | |
|---|---|---|---|---|---|---|---|---|---|---|---|
| | Gelling agent | Calcium lactate | | Calcium ion concentration | | | Calcium ratio | | Water separation rate | | Sensory |
| | K-carrageenan | | | Separated water portion during crushing (A) | Gel portion (B) | Entire (C) | (A)/(B) | (A)/(C) | During non-crushing | During crushing | |
| Example 8-1 | 0.25 | 0.10% | At production | 0.015% | 0.017% | 0.017% | 0.88 | 0.88 | 1.9% | 3.0% | ⊙ |
| Example 8-2 | 0.25 | 0.10% | 3 months | 0.015% | 0.017% | 0.017% | 0.88 | 0.88 | 10% | 17% | ⊙ |
| Example 8-3 | 0.25 | 0.10% | 5 months | 0.015% | 0.017% | 0.017% | 0.88 | 0.88 | 12% | 19% | ⊙ |
| Example 8-4 | 0.25 | 0.10% | 10 months | 0.015% | 0.016% | 0.017% | 0.94 | 0.88 | 14% | 25% | Δ |

As shown in Table 8, it is found that the panelists are less likely to feel an astringent taste in the case of the jelly beverages in which an amount of a separated water portion during crushing is 30 mass% or less relative to the entire jelly beverage, and a calcium ion concentration of the separated water portion during crushing is 0.34 mass% or less.

In addition, both the water separation rate during crushing and the water separation rate during non-crushing tend to increase with time. The water separation rate during crushing was 30% or less even after the lapse of 10 months (Examples 8 to 4), and the astringent taste was not strong in the sensory evaluation.

### [Test Example 9]

Table 9 shows the results of jelly beverages prepared using 0.15 to 0.30 mass% of agar and 0.10 to 0.20 mass% of κ-carrageenan as gelling agents.

**[Table 9]**

| | Preparation | | | | | | |
|---|---|---|---|---|---|---|---|
| | Gelling agent | | Calcium lactate | Calcium ion concentration | Water separation rate | | Sensory evaluation |
| | κ-carrageenan | Agar | | Entire (C) | During non-crushing | During crushing | |
| Comparative Example 9-1 | 0.15% | 0.15% | 0.10% | 0.017% | 15.0% | 33% | × |
| Example 9-1 | 0.15% | 0.20% | 0.10% | 0.017% | 8.9% | 25% | Δ |
| Example 9-2 | 0.20% | 0.20% | 0.10% | 0.017% | 9.2% | 26% | Δ |
| Example 9-4 | 0.10% | 0.25% | 0.10% | 0.017% | 3.6% | 21% | ⊙ |
| Example 9-5 | 0.20% | 0.30% | 0.10% | 0.017% | 7.8% | 19% | ⊙ |

As shown in Table 9, it is found that the panelists are less likely to feel an astringent taste in the case of the jelly beverages in which an amount of a separated water portion during crushing is 30 mass% or less relative to the entire jelly beverage, and a calcium ion concentration of the separated water portion during crushing is 0.34 mass% or less.

In addition, it is found that the larger the amounts of κ-carrageenan and agar are, the lower the water separation rate during crushing and the water separation rate during non-crushing are, and the astringent taste is reduced in the sensory evaluation.

### Industrial Applicability

According to the present invention, it is possible to provide a jelly beverage with a reduced astringent taste.

## Claims

1. A jelly beverage, wherein an amount of a separated water portion during crushing is 30 mass% or less relative to the entire jelly beverage, and
a calcium ion concentration of the separated water portion during crushing is 0.34 mass% or less.

2. The jelly beverage according to claim 1,
wherein a ratio of (the calcium ion concentration of the separated water portion during crushing)/(a calcium ion concentration of the jelly beverage) is 0.80 or more and 0.99 or less.

3. The jelly beverage according to claim 1 or 2, comprising
a calcium-reactive gelling agent as a gelling agent.

4. The jelly beverage according to any one of claims 1 to 3,
wherein the calcium-reactive gelling agent is at least one gelling agent selected from gellan gum, carrageenan, and LM pectin.

5. The jelly beverage according to any one of claims 1 to 4,
wherein the calcium ion concentration of the jelly beverage is 0.01 mass% or more and 0.34 mass% or less.

6. The jelly beverage according to any one of claims 1 to 5,
wherein the jelly beverage has a Brix of 5 or more and 40 or less.

7. The jelly beverage according to any one of claims 1 to 6,
wherein the jelly beverage has a gel strength of 0.1 N or more and 2 N or less.

8. The jelly beverage according to any one of claims 1 to 7,
wherein 12 months after production of the jelly beverage, the amount of the separated water portion during crushing is 30 mass% or less relative to the entire jelly beverage, and
the calcium ion concentration of the separated water portion during crushing is 0.34 mass% or less.

9. The jelly beverage according to any one of claims 1 to 8, wherein the separated water portion during crushing is collected by the following method, comprising:
applying a load to a spout-attached pouch container containing 180 g of the jelly beverage to discharge the jelly beverage; and leaving, for one minute, the crushed jelly beverage on a sieve on which only a liquid drops to collect the separated water portion during crushing, which has dropped under the sieve,
wherein the spout-attached pouch container is
in a form in which a straw is provided in a bag-shaped container made of a flexible sheet obtained by laminating a plastic film and a metal foil, and
wherein the sheet has a surface dimension of 80 mm × 120 mm,
a folded part provided in the sheet has a length of 54 mm,
a mouthpiece of the straw has a diameter of 12.3 mm, and
the straw has a length of 94.5 mm.

10. A method for producing a jelly beverage, comprising preparing raw materials such that an amount of a separated water portion during crushing is 30 mass% or less relative to the entire jelly beverage, and
a calcium ion concentration of a separated water portion during crushing is 0.34 mass% or less.

11. The method for producing a jelly beverage according to claim 10, the method comprising:
preparing a gelling agent dispersion liquid prepared by dispersing a gelling agent in water and a raw material dispersion liquid prepared by dispersing raw materials other than the gelling agent in water; and
mixing the gelling agent dispersion liquid with the raw material dispersion liquid.

12. A method for improving flavor of a jelly beverage containing a calcium ion source, wherein
an amount of a separated water portion during crushing is 30 mass% or less relative to the entire jelly beverage, and
a calcium ion concentration of a separated water portion during crushing is 0.34 mass% or less.
